# FASCICULE DE BREVET EUROPEEN

(11) **EP 3 600 933 B1**
(45) Date de publication et mention de la délivrance du brevet: **08.05.2024**
(21) Numéro de dépôt: 18722102.3
(22) Date de dépôt: 29.03.2018
(51) Int. Cl.: B60J 10/70

(54) **VITRAGE COMPRENANT AU MOINS UN CORDON PROFILÉ POUR LA LIAISON ENTRE DEUX VITRES ET VITRE POUR UN TEL VITRAGE**
VERGLASUNG MIT MINDESTENS EINER PROFILLEISTE FÜR DIE VERBINDUNG ZWEI FENSTERN UND FENSTER FÜR SOLCH EINE VERGLASUNG
GLAZING COMPRISING AT LEAST ONE PROFILED BEAD FOR THE CONNECTION BETWEEN TWO WINDOWS AND WINDOW FOR SUCH A GLAZING

(30) Priorité: 30.03.2017 FR 1752694
(43) Date de publication de la demande: 05.02.2020
(60) Demande divisionnaire: 23186115.4
(73) Titulaire: SAINT-GOBAIN GLASS FRANCE, 92400 Courbevoie (FR)
(72) Inventeur: DE PAOLI, Martial, 60400 Cuts (FR); LAMOUREUX, Laurent, 60170 Ribecourt-Dreslincourt (FR)
(74) Mandataire: Saint-Gobain Recherche
(86) Numéro de dépôt international: PCT/FR2018/050764
(87) Numéro de publication internationale: WO 2018/178574

(56) Documents cités:
- WO-A1-2006/064153
- FR-A1- 2 916 690
- FR-A1- 2 952 144
- GB-A- 2 047 784

## Description

La présente invention concerne un vitrage, et notamment un vitrage de véhicule, comprenant deux vitres contiguës, avec notamment au moins une, voire les deux, vitre(s) feuilletée (s) comprenant alors une feuille de verre extérieure, une feuille de verre intérieure et une feuille intercalaire de matière plastique située entre lesdites deux feuilles de verre, chaque vitre présentant une face extérieure, un chant et une face intérieure.

Le vitrage selon l'invention comporte le long d'au moins une partie d'au moins un bord d'une première vitre un cordon profilé spécifique pour permettre l'assemblage d'une seconde vitre, contigüe à la première, le long de ce bord.

L'art antérieur connaît des solutions de juxtaposition de vitres, et notamment pour des véhicules, pour lesquelles une première vitre et une seconde vitre juxtaposée ou contigüe à la première sont assemblées côte à côte grâce à un système d'assemblage, et notamment la demande internationale de brevet : WO 2006/064153.

Toutefois, il est difficile de réaliser une jonction affleurante avec un aspect esthétique identique tout le long d'un bord longitudinal des deux vitres.

Plus récemment, il a été proposé dans la demande internationale de brevet N° WO 2010/006257 une première vitre comportant un cordon profilé renforcé qui présente une, voire deux, lèvre(s) qui entre(nt) en contact avec une seconde vitre, contigüe.

Toutefois, cette solution ne permet pas de réaliser une jonction affleurante efficace entre les deux vitres.

La présente invention a pour but de remédier à des inconvénients de l'art antérieur en proposant une solution de jonction simple et fiable entre deux vitres et cela que les vitres soient chacune monolithique ou feuilletée, afin de permettre de réaliser une double jonction affleurante à l'endroit de chaque arête (face extérieure-chant) de chacune des deux vitres.

Les moyens proposés par l'invention participent activement à la jonction entre les deux vitres afin d'éviter tout contact entre ces vitres et entre une vitre et la feuillure de carrosserie adjacente lors de l'assemblage (c'est-à-dire le montage) des vitres dans la baie qu'elles doivent fermer, ainsi que pendant toute la durée de vie du vitrage. Ils peuvent en outre permettre :
- d'améliorer le coefficient aérodynamique en participant à la réduction du coefficient de pénétration dans l'air, et/ou
- de réduire les bruits aérodynamiques des liaisons, et/ou
- de diminuer la pénétration de poussières ou de fluides plus à l'intérieur que la face extérieur des vitres, et/ou
- de compenser de faibles jeux ou de faibles dispersions de fabrication d'une vitre à l'autre pour un même modèle de vitre, et/ou
- de créer une liaison esthétique discrète lorsque le revêtement extérieur est choisi dans une couleur sombre, proche de la couleur des bords de la vitre, ou au contraire une liaison qui attire l'œil lorsque le revêtement extérieur est choisi avec un aspect clair ou métallique (par exemple un aspect chromé).

Un but particulier poursuivi est de permettre une liaison efficace entre les deux vitres à l'aide d'un cordon profilé unique, intégrant tous les éléments nécessaires à cette liaison ; ainsi, la liaison est plus simple à réaliser.

La présente invention se rapporte ainsi à un vitrage, et notamment un vitrage de véhicule, selon la revendication 1. Les revendications dépendantes présentent des caractéristiques avantageuses.

Ce vitrage comprend deux vitres contiguës, avec notamment au moins une, voire les deux, vitre(s) feuilletée(s) comprenant une feuille de verre extérieure, une feuille de verre intérieure et une feuille intercalaire de matière plastique située entre lesdites deux feuilles de verre, chaque vitre présentant une face extérieure, un chant et une face intérieure.

Ce vitrage est remarquable en ce qu'il comporte :
- d'une part deux corps profilés situés en vis-à-vis et situés chacun au contact contre une partie du chant d'une desdites vitres [tout en étant à distance de l'autre corps/sans contact direct] et
- d'autre part un, ou deux, revêtement(s) extérieur(s) qui est (ou sont) situé(s chacun) plus à l'extérieur que lesdits corps profilés et contre une partie du chant desdites vitres et qui présente(nt chacun) une face extérieure qui est située dans la continuité de ladite face extérieure de ladite vitre
- ledit, ou lesdits, revêtement(s) extérieur(s) étant souple (s), d'une dureté Shore A comprise entre 45 et 90, voire entre 55 et 85.

La présence des deux corps profilés séparés (c'est-à-dire distincts matériellement), et du (ou des deux) revêtement(s) extérieur(s) se constate en particulier lorsque le vitrage est observé en coupe transversale à la jonction entre les deux vitres.

Les deux corps profilés peuvent être constitués du même matériau ; le (ou des deux) revêtement(s) extérieur(s) est (ou sont) constitué(s) d'un matériau qui est différent de celui des deux corps profilés ; ce matériau est, de préférence, le même pour les deux revêtements extérieurs. Ce matériau du (ou des) revêtement(s) extérieur(s) est plus souple que celui du (ou des) corps profilé (s) et cette souplesse est exprimée ici par une référence à une dureté relativement faible, exprimée en Shore A.

Les deux corps profilés et le (ou les) revêtement (s) extérieur(s) appartiennent au cordon profilé du vitrage et font chacun partie intégrante de ce cordon profilé ; il n'est pas possible de séparer un revêtement extérieur du corps profilé qui le porte en conservant l'intégrité du cordon profilé.

Comme le matériau des corps profilés est différent de celui du (ou des) revêtement (s) extérieur (s), les corps profilés peuvent ainsi est fabriqués par co-extrusion de plusieurs matières, en même temps que le (ou les) revêtement(s) extérieur(s), ce qui est particulièrement pratique.

Dans le vitrage, chacun des deux corps profilés est au contact, et cela de préférence sans adhésion contre une partie du chant d'une vitre. Chacun des deux corps profilés est de préférence à distance de l'autre corps (c'est-à-dire sans contact direct) afin que ce soit le revêtement extérieur, ou les deux revêtements extérieurs qui réalise(nt) réellement la jonction, grâce à leur souplesse, et non pas les corps profilés, qui sont plus durs et constituent un support efficace et fiable pour le (ou les) revêtement(s) extérieur(s).

Chaque corps profilé est situé en vis-à-vis et au contact d'une partie seulement du chant de la vitre adjacente selon l'épaisseur de cette vitre adjacente (c'est-à-dire la hauteur de son chant) et il est situé en vis-à-vis d'une partie ou de la totalité dudit chant de la vitre adjacente selon la longueur de ce chant.

Le revêtement extérieur (ou les deux revêtements extérieurs) est (ou sont) situé(s) en vis-à-vis d'une partie seulement du chant de la vitre adjacente selon l'épaisseur de cette vitre adjacente (c'est-à-dire la hauteur de ce chant) car le corps profilé qui est situé dessous, vers l'intérieur, est aussi en vis-à-vis de ce chant adjacent ; il (s) est (sont) situé (s) en vis-à-vis d'une partie ou de la totalité du chant de la vitre adjacente selon la longueur de ce chant.

Le revêtement extérieur, ou les deux revêtements extérieurs lorsqu'il y en a deux, repose (ou reposent) sur ledit (ou respectivement lesdits) corps profilé(s) ; ce (ou ces) corps profilé(s) constitue(nt) un appui rigide pour ce (ou ces) revêtement(s) extérieur(s), souple(s).

Ce revêtement extérieur lorsqu'il est unique est de préférence au contact du chant de la vitre à laquelle est fixé le corps profilé qui porte ce revêtement extérieur et au contact du chant de la vitre contigüe afin que ce double contact participe à diminuer la pénétration de poussière ou de fluide plus à l'intérieur et confère une apparence esthétique de continuité. Ce double contact est un contact sans adhésion. Le revêtement extérieur est de préférence sous compression interne.

Lorsque deux revêtements extérieurs sont présents, chacun est de préférence au contact du chant de la vitre à laquelle est fixé le corps profilé qui porte ce revêtement extérieur sans être au contact du chant de la vitre contigüe puisque c'est l'autre revêtement extérieur, porté par l'autre corps profilé qui est au contact de ce chant de la vitre contigüe. Ce double contact (revêtement extérieur - chant) participe à diminuer la pénétration de poussière ou de fluide plus à l'intérieur et confère une apparence esthétique de continuité. Ce double contact est un contact sans adhésion. Chaque revêtement extérieur est de préférence sous compression interne au niveau du contact : revêtement extérieur - chant).

D'une manière surprenante, il a ainsi été découvert qu'il était possible de réaliser une jonction entre deux vitres avec deux corps profilés et un (ou deux) revêtement(s) extérieur(s). Cette solution est plus simple à fabriquer que les solutions de l'art antérieur et plus efficace, en particulier lorsque la distance entre les deux vitres contigües est faible.

D'une manière indépendante, il a été découvert qu'il est possible de parvenir à des résultats similaires en prévoyant un vitrage similaire à celui de l'invention sauf en ce qu'il comporte :
- d'une part un seul corps profilé situé en vis-à-vis d'une partie, voire de la totalité du chant desdites vitres, sans contact avec ces chants,
- d'autre part, deux revêtements extérieurs, courbes, qui comportent chacun une portion située plus à l'extérieur que ledit corps profilé et une portion contre une partie seulement respectivement du chant desdites vitres et qui présentent chacun une face extérieure qui est située dans la continuité de ladite face extérieure de ladite vitre, et
- lesdits revêtements extérieurs étant souples, d'une dureté Shore A comprise entre 45 et 90, voire entre 55 et 85.

De préférence, le vitrage selon l'invention présente une largeur entre lesdits chants des vitres qui est comprise entre 2,0 et 20,0 mm, voire comprise entre 3,0 et 15,0 mm, voire comprise entre 4,0 et 10,0 mm. Ceci permet une liaison entre les vitres qui est particulièrement compacte.

Dans une variante indépendante, un, ou les deux, corps profilé(s) présente(nt) une dureté Shore D comprise entre 1 et 100, voire entre 5 et 95 ; Ceci permet une meilleure tenue mécanique. En outre, de préférence encore, la largeur des deux corps profilés est identique.

Dans une variante indépendante de la précédente, un, ou les deux, corps profilé(s) comporte(nt), vu en coupe transversale, une aile intercalaire et la vitre est feuilletée, ladite aile intercalaire étant située entre une face intercalaire de ladite feuille de verre extérieure et une face intercalaire de ladite feuille de verre intérieure.

Ladite aile intercalaire est au contact direct ou indirect (et dans ce cas par l'intermédiaire d'une matière adhésive) de ladite face intercalaire de ladite feuille de verre extérieure et elle est au contact direct ou indirect (et dans ce cas par l'intermédiaire d'une matière adhésive) de ladite face intercalaire de ladite feuille de verre intérieure.

Dans le cadre de cette variante, ladite aile intercalaire présente, de préférence, une épaisseur :
- égale à l'épaisseur entre ladite feuille de verre extérieure et ladite feuille de verre intérieure (de la vitre qui porte le cordon profilé) et en particulier égale à l'épaisseur de ladite feuille intercalaire de matière plastique (de cette vitre) et notamment égale à 0,76 mm, ou
- inférieure à l'épaisseur entre ladite feuille de verre extérieure et ladite feuille de verre intérieure (de cette vitre).

De préférence, ladite aile intercalaire est maintenue entre la face intercalaire de la feuille de verre extérieure et la face intercalaire de la feuille de verre intérieure par maintien mécanique, par exemple en étant comprimée entre ces deux faces et/ou par maintien chimique, par exemple en étant collée à ces deux faces. Bien que cela ne soit pas illustré, il est possible par ailleurs que l'aile intercalaire soit noyée (maintien mécanique et chimique) dans la feuille intercalaire de matière plastique, avec de la matière de cette feuille intercalaire de matière plastique d'une part entre l'aile intercalaire et la face intercalaire de la feuille de verre extérieure et/ou d'autre part entre l'aile intercalaire et la face intercalaire de la feuille de verre intérieure.

Dans une autre variante indépendante des précédentes, un, ou les deux, corps profilé(s) comporte(nt), vu en coupe transversale, une aile intérieure située en dessous de ladite face intérieure de ladite vitre.

Dans le cadre de cette variante, ladite aile intérieure comporte, de préférence, un bossage avec la pointe de la bosse orientée vers l'intérieur afin de permettre de prendre appui sur la feuillure, ledit bossage présentant, de préférence, une dureté Shore A comprise entre 45 et 95, voire entre 55 et 85.

Lorsqu'un corps profilé comporte, vu en coupe transversale, une aile intercalaire alors la vitre à laquelle il est fixé est nécessairement feuilletée ; Lorsqu'un corps profilé comporte, vu en coupe transversale, une aile intérieure alors la vitre à laquelle il est fixé n'est pas nécessairement feuilletée ; elle peut être monolithique ou feuilletée.

Dans une variante indépendante des précédentes, un, ou les deux, revêtement(s) extérieur(s) comporte(nt) une languette intérieure située(s) entre les deux corps profilés et étant de préférence venue de matière avec ledit revêtement extérieur.

Dans une variante indépendante des précédentes, un desdits corps profilés comporte une languette latérale pour l'appui du revêtement extérieur de la vitre contiguë ; un seul corps profilé comporte une languette latérale.

Dans une variante indépendante des précédentes, lesdits deux corps profilés sont chacun fixés à une seule desdites vitres.

Dans une variante alternative à la précédente, lesdits deux corps profilés sont fixés tous les deux à une seule vitre et de préférence, ledit vitrage comporte un seul revêtement extérieur qui présente une face extérieure qui est située dans la continuité desdites faces extérieures desdites vitres.

La présente invention se rapporte par ailleurs à un élément de vitrage selon la revendication 12 pour un vitrage suivant l'invention;

Dans une variante toute particulière cette vitre comporte deux corps profilés dont un seul est au contact contre une partie de son chant et de préférence un seul revêtement extérieur qui présente une face extérieure qui est située dans la continuité de sa face extérieure.

Avantageusement, la présente invention permet de proposer un assemblage de deux vitres qui est fiable, compact et simple à mettre en oeuvre.

Il est ainsi possible de réaliser un vitrage comportant deux vitres, de telle sorte que la face extérieure des deux vitres soient dans la continuité l'une de l'autre, cette continuité étant réalisée par le revêtement extérieur ou les revêtements extérieurs entre les chants des vitres ; cette continuité pouvant toutefois être interrompue par une fente.

Dans le vitrage selon l'invention, les deux vitres contiguës ne sont pas fixées (dans le sens directement attachées ou collées) l'une à l'autre : elles sont chacune fixées (collées) à un élément unique (c'est-à-dire au même élément) de la baie qu'elles ferment ensemble, c'est-à-dire à un élément de carrosserie (comme par exemple une feuillure) dans le cas de l'application du vitrage comme vitrage de véhicule.

Dans le présent document, lorsque des plages de valeurs sont indiquées, les bornes sont incluses dans les plages.

On décrira ci-après, à titre d'exemple non limitatif, plusieurs formes d'exemples de réalisation, en référence aux figures annexées :
- la figure 1 est une vue en coupe d'un premier mode de réalisation suivant l'invention de l'assemblage de deux vitres sur une feuillure de carrosserie, à l'aide d'un cordon profilé à deux corps profilés à aile intérieure et à revêtement extérieur unique ;
- la figure 2 est une vue en coupe de la vitre de droite de la figure 1 avec le cordon profilé à deux corps profilés et à revêtement extérieur unique fixé à cette vitre ;
- la figure 3 est une vue en coupe d'un second mode de réalisation suivant l'invention de l'assemblage de deux vitres sur une feuillure de carrosserie, à l'aide de deux cordons profilés comportant chacun un corps profilé à aile intérieure et un revêtement extérieur, un corps profilé comportant une languette latérale pour l'appui du revêtement extérieur du cordon profilé de l'autre vitre ;
- la figure 4 est une vue en coupe d'une variante de la figure 3, qui se distingue par le fait que les deux cordons profilés comportent chacun un corps profilé à aile intercalaire ;
- la figure 5 est une vue en coupe d'une variante du mode de la figure 1, qui se distingue par le fait que chaque vitre comporte un cordon profilé comportant un corps profilé à aile intercalaire et un revêtement extérieur ; et
- la figure 6 est une vue en coupe d'un mode de réalisation d'un assemblage de deux vitres sur une feuillure de carrosserie, à l'aide d'un seul cordon profilé comportant un corps profilé unique, à aile intérieure et à deux revêtements extérieurs courbes.

A l'intérieur de chaque figure, les proportions entre les différents éléments sont respectées et les éléments en arrière plan ne sont en général pas représentés, afin de faciliter leur lecture. Les mêmes références désignent les mêmes éléments d'une figure à l'autre.

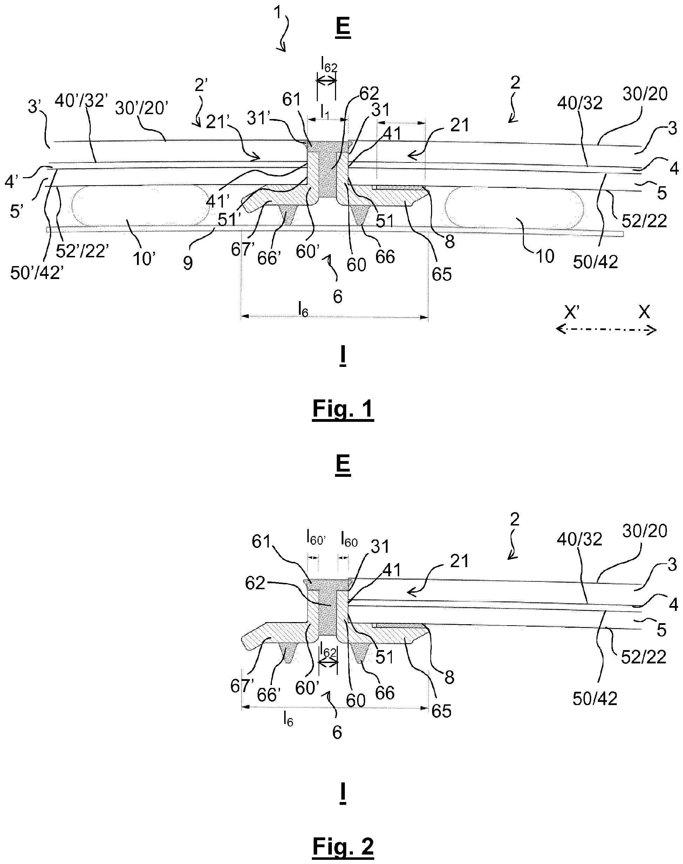

Un vitrage 1, 100 est visible en partie sur les figures 1, 3 à 6, comprenant au moins deux vitres 2, 2', contiguës, chacune monolithique ou feuilletée.

La présente invention est décrite à titre d'exemple dans le cadre d'une application comme vitrage de véhicule ; ce vitrage ferme une baie en réalisant une séparation entre un espace extérieur E qui est extérieur au véhicule et un espace intérieur I qui est intérieur au véhicule. Les notions de « extérieur » et « intérieur » sont donc considérée par rapport respectivement à cet espace extérieur E et cet espace intérieur I.

Chaque vitre 2, 2' présente ainsi une face extérieure 20, 20' orientée vers l'espace extérieur E, une face intérieure 22, 22' vers l'espace intérieur I et un chant 21, 21' périphérique, situé entre ces deux faces.

La présente invention est décrite en particulier en étant appliquée à un vitrage de toit de véhicule, fixe, et les figures sont ainsi des vues en coupe selon la verticale du vitrage 1, 100 installé, collé, dans une baie de carrosserie.

Dans les figures 1, 3 à 6, l'application à un vitrage de toit de véhicule est décrite, ce vitrage 1, 100 comportant deux vitres côte à côte ou plus précisément encore l'une devant l'autre lorsque le sens d'avancé du véhicule est considéré.

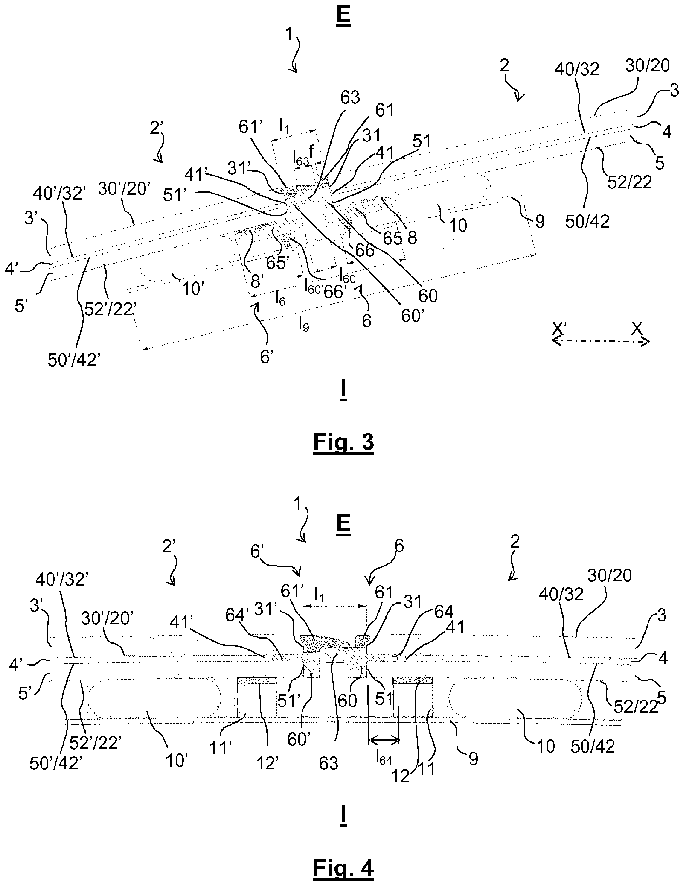

Dans le cadre du présent document, la notion de « centripète » et celle de « centrifuge » est à considérer par rapport à l'axe longitudinal central d'avancé du véhicule équipé du vitrage selon l'invention en tant que vitrage de toit, c'est-à-dire l'axe généralement appelé l'axe X-X' du véhicule, tel qu'on peut le voir uniquement en figures 1 et 3 mais c'est la même orientation pour les autres figures ; le sens centripète est le sens X de cet axe alors que le sens centrifuge est le sens opposé, X'.

Le vitrage 1, 100 est destiné à fermer une baie qui est ici ménagée dans une carrosserie du véhicule ; un bord de cette baie - en l'occurrence un bord transversal central est illustré par une feuillure 9.

Chacune des deux vitres 2, 2' du vitrage 1, 10 peut éventuellement être une vitre monolithique constituée d'une seule feuille de verre.

Chacune des deux vitres 2, 2' du vitrage 1, 100 est de préférence une vitre feuilletée qui comporte, de l'extérieur vers l'intérieur, au moins : une feuille de verre extérieure 3, 3', une feuille intercalaire de matière plastique 4, 4' et une feuille de verre intérieure 5, 5' ; toutefois, il est possible qu'au moins une autre feuille soit intercalée entre la feuille de verre extérieure 3, 3' et la feuille intercalaire de matière plastique 4, 4' ou entre la feuille intercalaire de matière plastique 4, 4' et la feuille de verre intérieure 5, 5'.

Dans les figures, les feuilles de verre sont illustrées chacune avec un chant arrondi ; toutefois, ces chants peuvent être droits, avec les arêtes entre les chants et les faces qui sont alors à angle droit.

Chaque feuille de verre extérieure 3, 3' présente une face extérieure 30, 30' qui est orientée vers l'extérieur E et correspondant ainsi à la face extérieure 20, 20' de la vitre 2, 2', une face intercalaire 32, 32' qui est orientée vers la feuille intercalaire de matière plastique 4, 4', et un chant 31, 31' situé entre ces deux faces.

Chaque feuille de verre intérieure 5, 5' présente une face intercalaire 50, 50' qui est orientée vers la feuille intercalaire de matière plastique 4, 4', une face intérieure 52, 52' qui est orientée vers l'intérieur I et correspondant ainsi à la face intérieure 22, 22' de la vitre 2, 2', et un chant 51, 51' situé entre ces deux faces.

Chaque feuille intercalaire de matière plastique 4, 4' présente une face intercalaire extérieure 40, 40' qui est orientée vers la face intercalaire 32, 32' et qui est ici au contact de cette face intercalaire 32, 32', une face intercalaire intérieure 42, 42' qui est orientée vers la face intercalaire 50, 50' et qui est ici au contact de cette face intercalaire 50, 50', ainsi qu'un chant 41, 41' qui est situé entre ces deux faces intercalaires 40, 42 et 40', 42'.

Chaque vitre 2, 2' présente ainsi une face extérieure réalisée par la face extérieure 30, 30' de la feuille de verre extérieure 3, 3', une face intérieure réalisée par la face intérieure 52, 52' de la feuille de verre intérieure 5, 5' et un chant situé entre ces deux faces, correspondant au chant 31, 31' de la feuille de verre extérieure 3, 3' et au chant 51, 51' de la feuille de verre intérieure 5, 5', ces deux chants (d'une part 31, 51 et d'autre part 31', 51') étant ici dans la continuité l'un de l'autre tout en étant séparés par un espace correspondant à l'épaisseur de la feuille de matière plastique 4, 4'.

Chaque vitre 2, 2' est destinée à être collée sur la feuillure 9 à l'aide d'un cordon de colle 10, 10' illustré d'une manière schématique, qui est situé entre la face intérieure 22, 22' et une partie adjacente de la feuillure 9, c'est-à-dire entre la face intérieure 52, 52' de la feuille de verre intérieure et une partie adjacente de la feuillure 9.

Il est possible que la vitre adjacente 2' soit une vitre monolithique et que la vitre adjacente 2 soit feuilletée, ou inversement.

La vitre adjacente 2' présente, de préférence, une épaisseur identique à la vitre 2 afin de faciliter le positionnement de l'une par rapport à l'autre lors de l'assemblage et de la fabrication du vitrage 1.

Toutefois l'invention peut être particulièrement pratique lorsque les deux vitres 2, 2' ne sont pas de même épaisseur, afin de permettre justement de rattraper une épaisseur par rapport à l'autre.

La face extérieure 20' de la vitre adjacente 2' est, de préférence, située sensiblement dans la continuité ou dans le prolongement dans la face extérieure 20 de la vitre 2.

La face intérieure 22' de la vitre adjacente 2' est, de préférence aussi, située sensiblement dans le prolongement de la face intérieure 22 de la vitre adjacente 2 mais si ce n'est pas le cas, la feuillure 9 ou une cale supplémentaire peut compenser une éventuelle différence de prolongement.

Sur les figures 1, 3 à 6, la feuillure 9 constitue une traverse de la carrosserie, s'étendant d'un bord gauche jusqu'à un bord droit de la carrosserie du véhicule. Elle constitue un support rigide pour les bords de la vitre 2 et de la vitre adjacente 2'. Elle présente une largeur l₉ de l'ordre de 5,0 à 12,0 cm.

L'assemblage des deux vitres 2, 2' pour former le vitrage 1 est décrit ci-après, en référence aux figures 1 à 5.

Lorsque la jonction entre les deux vitres est observée en coupe transversale, le vitrage comporte :
- d'une part deux corps profilés 60, 60' qui sont séparés/distincts l'un de l'autre et qui sont situés en vis-à-vis l'un de l'autre ; chaque corps profilés 60, 60' étant au contact contre une partie seulement du chant respectivement 21, 21' d'une vitre 2, 2', tout en étant à distance de l'autre corps profilé, respectivement 60', 60, c'est-à-dire sans contact direct avec l'autre corps profilé ;
- d'autre part, un ou deux revêtement(s) extérieur(s) 61, 61' qui est (ou sont) situé(s chacun) plus à l'extérieur que lesdits corps profilés 60, 60 et qui est (ou sont) situé(s chacun) contre une partie seulement du chant 21, 21' de la vitre 2, 2' ; ce (ou ces) revêtement(s) extérieur(s) présente(nt chacun) une face extérieure qui est située dans la continuité de la face extérieure 20, 20' de la vitre 2, 2' contre laquelle il est (ou sont) ;
- avec en outre, ledit, ou lesdits, revêtement(s) extérieur (s) 61, 61' qui est (ou sont) souple (s), d'une dureté Shore A comprise entre 45 et 90, voire entre 55 et 85.

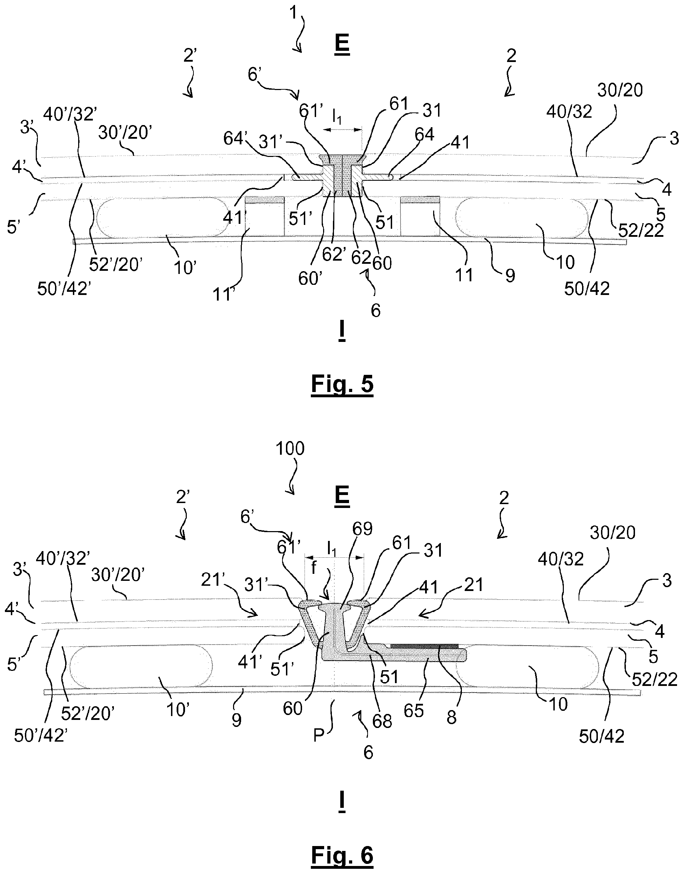

La présente solution est particulière indiquée lorsque le vitrage 1 présente une largeur l₁ entre lesdits chants 21, 21' qui est relativement faible, c'est-à-dire comprise entre 2,0 et 20,0 mm, voire comprise entre 3,0 et 15,0 mm, voire comprise entre 4,0 et 10,0 mm. Cette largeur l₁ est par exemple de 4,5 mm en figures 1 et 5, d'environ 8 mm en figure 3 et d'environ 7 mm en figure 4

En effet, l'assemblage proposé est particulièrement fiable lorsque la largueur entre les chants des vitres est faible.

Pour présenter les différents modes et les différentes variantes de l'invention, la notion de « cordon profilé » est utilisée ci-après. Cette notion vise ce que l'on peut appeler d'une manière très générale un « joint » de vitre : un joint de vitre est un cordon de matière plastique qui est fixé, ou attaché, à un bord périphérique d'une vitre après la fabrication de la vitre et avant l'assemblage des deux vitres d'une manière contiguë pour former un vitrage.

Pour son attachement à une vitre, un cordon profilé 6, 6' comporte, vu en coupe transversale :
- une aile intérieure 65, 65' qui est située sous un bord de la face intérieure 22, 22' de la vitre 2, 2', et plus précisément ici sous un bord de la face intérieure 52, 52' de la feuille de verre intérieure 5, 5', comme visible sur les figures 1 à 3, et/ou
- lorsque la vitre 2, 2' est une vitre feuilletée, une aile intercalaire 64, 64' qui est située entre la face intercalaire 32, 32' de la feuille de verre extérieure 3, 3' et la face intercalaire 50, 50' de ladite feuille de verre intérieure 5, 5', comme visible sur les figures 4 et 5.

Ces deux modes d'attache sont présentés ci-après. Ils présentent chacun une variante de mise en œuvre de l'invention.

### Cordon profilé à aile intérieure

Le cordon profilé 6, 6' comporte, vu en coupe transversale, une aile intérieure 65, 65' située en dessous (directement sous, ou indirectement sous et avec interposition/insertion d'une couche de colle ou d'un ruban adhésif) de la face intérieure 22, 22' de la vitre 2, 2' à laquelle il est attaché ; l'aile intérieure 65, 65' est ainsi plus à l'intérieur que cette face intérieure 22, 22'.

Une bande d'adhésion 8, 8' formée par une couche de colle ou un ruban adhésif double face est situé entre une partie centripète de l'aile intérieure 65, 65' et la face intérieure 22, 22'.

Cette bande d'adhésion permet de fixer cette aile intérieure 65, 65' à la face intérieure 22, 22' sus-jacente.

### Cordon profilé à aile intercalaire

L'aile intercalaire 64, 64' est, de préférence, au contact d'une part de la face intercalaire 32, 32' de la feuille de verre extérieure 3, 3' et d'autre part de la face intercalaire 50, 50' de la feuille de verre intérieure 5, 5' et s'étend entre ces deux faces.

Le long du bord de la vitre comportant le cordon profilé 6, 6' avec aile intercalaire le chant 41, 41' de la feuille intercalaire de matière plastique 4, 4' est donc en retrait centripète par rapport aux chants 31, 31'/ 51, 51' respectivement de la feuille de verre extérieure et de la feuille de verre intérieure pour permettre la présence de l'aile intercalaire.

En figures 4 et 5, l'aile intercalaire 64, 64' est une aile simple, réalisée dans le même matériau et venue de matière avec le corps profilé 60, 60', sans renfort interne.

Comme visible en figures 4 et 5, la totalité d'une face extérieure de l'aile intercalaire 64, 64' est au contact de la face intercalaire 32, 32' de ladite feuille de verre extérieure 3, 3' et la totalité d'une face intérieure de l'aile intercalaire 64, 64' est au contact de la face intercalaire 50, 50' de la feuille de verre intérieure 5, 5' .

L'aile intercalaire 64, 64' occupe ainsi l'espace situé en partant de l'aplomb sous le chant 31, 31' de la feuille de verre extérieure et au-dessus du chant 52, 52' de la feuille de verre intérieure et en direction de la feuille intercalaire de matière plastique 4, 4' ; l'aile intercalaire présente ainsi une épaisseur identique à l'épaisseur de la feuille intercalaire de matière plastique 4, 4' (en l'occurrence ici une épaisseur de 0,76 mm). Toutefois, elle n'entre pas en contact avec la feuille intercalaire de matière plastique 4, 4' afin de ne pas perturber la cohésion réalisée par cette feuille intercalaire de matière plastique 4, 4' avec les deux feuilles de verre, c'est-à-dire afin de ne pas perturber le feuilletage.

L'aile intercalaire 64, 64' présente une largeur l₆₄, illustrée en figure 4, comprise entre 2,0 et 6,0 mm, voire comprise entre 3,0 et 5,0 mm et ici précisément de 3,5 mm (c'est la même valeur pour l'exemple de la figure 5). Cette largeur est suffisante pour permettre un bon maintien de l'aile intercalaire entre la feuille de verre extérieure et la feuille de verre intérieure sans risquer de perturber la cohésion de la feuille intercalaire de matière plastique 4, 4' avec les deux feuilles de verre.

En figures 4 et 5, l'aile intercalaire 64, 64' n'entre pas en contact avec la feuille intercalaire de matière plastique 4, 4'. Elle est maintenue entre la face intercalaire 32 et la face intercalaire 50 en étant comprimée (maintien mécanique) entre ces deux faces, comme illustré ici ; elle pourrait être collée (maintien chimique) à ces deux faces. Bien que cela ne soit pas illustré, il est possible par ailleurs que l'aile intercalaire 64, 64' soit noyée dans la feuille intercalaire de matière plastique 4, 4', avec de la matière de cette feuille intercalaire de matière plastique 4, 4' d'une part entre l'aile intercalaire 64, 64' et la face intercalaire 32 et/ou d'autre part entre l'aile intercalaire 64, 64' et la face intercalaire 50.

Il est possible de réaliser une aile intercalaire avec une épaisseur inférieure à l'épaisseur entre la feuille de verre extérieure et ladite feuille de verre intérieure de la vitre.

La vitre 2, 2' repose sur la feuillure 9 grâce à une butée 11, 11' (ou plusieurs butées réparties le long du bord) interposée(s) entre la face intérieure 22, 22' et la face de la feuillure orientée vers l'extérieur. Cette(ces) butée(s) peut (peuvent) permettre d'empêcher le contact entre la face intérieure 22, 22' et la feuillure afin de permettre de préserver la vitre 2, 2' et présenter par exemple une face extérieure souple 12, 12' ; elle (s) peut (peuvent) permettre par ailleurs de contrôler l'épaisseur du cordon de colle 10, 10'.

Lorsque le cordon profilé 6 comporte à la fois une aile intercalaire et une aile intérieure, pour pouvoir maintenir l'aile intérieure 65 éloignée de la face intérieure 52 lors de l'introduction l'aile intercalaire 64 dans l'espace entre les deux feuilles de verre, l'aile intérieure 65 comporte une portion charnière (non illustrée) en une matière polymérique souple.

Cette portion de charnière permet de soulever l'aile intérieure 65 pour positionner la bande d'adhésion 8 (cas d'une couche de colle) ou activer la bande d'adhésion 8 (cas d'un ruban adhésif double face avec un film de protection provisoire qui peut être pelé) et permettre de fixer l'aile intérieure 65 à la face intérieure 52 sus-jacente.

Bien que les modes d'attache sont présentés ci-avant de telle sorte que dans les figures 3 à 5 il est le même pour les deux vitres 2, 2' du vitrage 1, il est tout à fait possible que pour un vitrage le mode d'attache d'un cordon profilé à une vitre soit différent du mode d'attache d'un autre cordon profilé à l'autre vitre.

Sur les figures le corps profilé 60, 60' est latéral : le corps profilé 60, 60' du cordon profilé 6, 6' s'étend le long d'une partie du chant de la vitre 2, 2'.

Le corps profilé 60, 60' est latéral car il ne dépasse pas d'un plan artificiel considéré qui serait dans la continuité de la face extérieure 20, 20' de la vitre 2, 2' à laquelle il est attaché, ni d'un plan artificiel considéré qui serait dans la continuité de la face intérieure 22, 22' de la vitre 2, 2' à laquelle il est attaché.

De préférence, pour un vitrage selon l'invention, la largeur l₆₀ du corps profilé 60 est identique à la largeur l₆₀, du corps profilé 60', afin de faciliter le référencement.

Les corps profilés 60, 60' présentent chacun une largeur l₆₀, l₆₀, qui est par exemple d'environ 1,2 mm en figure 1, d'environ 1,8 mm en figure 3, d'environ 1,5 mm en figure 4 et d'environ 1,4 mm en figure 5.

La face extérieure 20, 20' de la vitre 2, 2' est ainsi libre par rapport au cordon profilé : le cordon profilé ne comporte pas d'aile extérieure ; la face intérieure 22, 22' n'est libre que dans la variante à aile intercalaire et n'est pas libre dans la variante à aile intérieure en raison de la présence de cette aile intérieure.

Dans les variantes illustrées aux figures 1 à 5, le corps profilé 60, 60' est situé, du point de vue de l'orientation intérieur/extérieur, en vis-à-vis de la totalité de la hauteur du chant 51, 51' de ladite feuille de verre intérieure 5, 5' et du chant 41, 41' de la feuille intercalaire de matière plastique 4, 4' et en vis-à-vis d'une partie seulement de la hauteur du chant 31, 31' de ladite feuille de verre extérieure 3, 3'.

Quel que soit le mode de réalisation, la matière constitutive du corps profilé 60 peut être renforcée par la présence, à l'intérieur, d'un insert 68, comme par exemple un insert métallique, qui permet d'augmenter la rigidité du corps profilé. Cet insert peut être par exemple un profilé en aluminium d'une épaisseur de 0,4 mm.

Cet insert peut s'étendre à l'intérieur d'une aile, c'est-à-dire à l'intérieure de l'aile intercalaire 64, 64' ou à l'intérieur de l'aile intérieure 65, 65'.

L'aile intercalaire 64, 64' présente une largeur l₆₄ d'environ 4,0 mm et l'aile intérieure 65, 65' présente une largeur d'environ 12,0 mm ; la bande d'adhésion 8, 8' présente une largeur d'environ 6,0 mm.

Sur les figures 1 à 3, le cordon profilé 6, 6' présente une hauteur égale à l'épaisseur de la vitre 2, 2' augmentée de l'épaisseur de l'aile intérieure 65, 65', 67' et du bossage 66, 66'.

Sur les figures 4 et 5, le cordon profilé 6, 6' présente une hauteur identique à l'épaisseur de la vitre 2, 2' .

Le corps profilé 60, 60' est de préférence venu de matière avec l'aile intercalaire 64, 64' et/ou avec l'aile intérieure 65, 65' ; c'est pour cela qu'ils sont illustrés avec les mêmes hachures sur les figures. Ils sont de préférence dans un matériau relativement rigide, comme par exemple, un polymère thermoplastique, du type polypropylène. Le, ou les deux, corps profilé(s) 60, 60' présente(nt) de préférence une dureté Shore D comprise entre 1 et 100, voire entre 5 et 95, afin de constituer un support suffisamment dur pour le (ou les) revêtement(s) extérieur(s) 61, 61'.

Le revêtement extérieur 61, 61' est souple. Il est situé en vis-à-vis et au contact d'au moins une partie du chant 21, 21' de la vitre 2, 2' à laquelle le cordon profilé 6, 6' est fixé.

Il présente une dureté Shore A comprise entre 45 et 95, voire entre 55 et 85 ; C'est cette faible dureté qui lui confère sa souplesse. Il peut être par exemple en élastomère thermoplastique (TPE), du type TPE-U à base polyuréthane ou du type TPE-S à base de styrène.

Le contact du revêtement extérieur 61, 61' avec le chant 21, 21' est un contact simple, sans adhésion.

Le corps profilé 60, 60' réalise ainsi un support rigide pour le revêtement extérieur 61, 61'.

Comme visible sur les figures, la face extérieure 20, 20' de chaque vitre 2, 2' est libre par rapport au cordon profilé 6, 6' ; chaque revêtement extérieur 61, 61' présente une face extérieure qui est située dans la continuité de la face extérieure 20, 20' de la vitre 2, 2' contre laquelle il est situé. Chaque revêtement extérieur 61, 61' est ainsi affleurant avec la continuité de la face extérieure 20, 20' de la vitre 2, 2' ; il est « flush ». Chaque revêtement extérieur 61, 61' ne dépasse pas plus à l'extérieur que la face extérieure 20, 20' de la vitre 2, 2'.

La figure 1 illustre une variante particulière pour laquelle le vitrage 1 comporte un cordon profilé 6 unique, fixé à la vitre 2.

Ce cordon profilé 6 comporte deux corps profilés 60, 60' dont un seul est au contact contre une partie seulement du chant 21 de la vitre 2 à laquelle ce cordon profilé est fixé.

Ce cordon profilé 6 comporte par ailleurs un seul revêtement extérieur 61 qui présente une face extérieure qui est située dans la continuité de la face extérieure 20 de la vitre 2 à laquelle il est fixé.

Ce revêtement extérieur 61 comporte une languette intérieure 62 qui est située entre les deux corps profilés 60, 60' ; cette languette est venue de matière avec le revêtement extérieur 61. Cette languette intérieure 62 réalise un tampon entre les deux corps profilés 60, 60'. Elle présente ici une largeur l₆₂ d'environ 2,1 mm.

La figure 2 illustre la vitre 2 de la figure 1 avant son assemblage avec la vitre contiguë 2'. Elle montre que le cordon profilé 6 n'est fixé qu'à la vitre 2, grâce à la bande d'adhésion 8 ; il n'est pas fixé à la vitre adjacente 2'.

La comparaison de la figure 2 avec la figure 1 montre que dans le vitrage 1 de cette figure 1, le cordon profilé est fixé à la vitre 2 grâce uniquement à la bande d'adhésion 8, que cette vitre 2 est fixée à la feuillure 9 grâce uniquement au cordon de colle 10, et que la vitre contiguë 2' est fixée à cette feuillure 9 grâce uniquement au cordon de colle 10' tout en reposant sur l'aile intérieure 65', contre le corps profilé 60' et contre le revêtement extérieur 61. Les trois contacts de la vitre contiguë 2' avec l'aile intérieure 65', le corps profilé 60' et le revêtement extérieur 61 sont des contacts sans adhésion.

Le corps profilé 60' et une aile intérieure 67' qui s'étend sous la face intérieure 22' de la vitre contigüe 2' appartiennent tous les deux au cordon profilé 6 ; ils n'adhèrent pas à la vitre contigüe 2'.

Ce cordon profilé 6 présente une largeur totale l₆ d'environ 21 mm.

Les figures 3 à 5 illustrent d'autres variantes particulières pour chacune desquelles le vitrage 1 comporte deux cordons profilés 6, 6', attachés chacun respectivement à la vitre 2, 2' et uniquement respectivement à la vitre 2, 2' (c'est-à-dire sans être attaché respectivement à l'autre vitre 2', 2). Ainsi, lesdits deux corps profilés 60, 60' des cordons profilés 6, 6' sont chacun fixés respectivement à la vitres 2, 2'.

Pour ces variantes des figures 3 à 5 par ailleurs, chaque cordon profilé 6, 6' comporte un revêtement extérieur 61, 61', situé plus à l'extérieur que le corps profilé 60, 60' et reposant sur ce corps profilé 60, 60'.

Les figures 3 et 4 illustrent une variante particulière dans laquelle un seul corps profilé 60, celui du vitrage de droite sur les figures, comporte une languette latérale 63 s'étendant latéralement d'une manière centrifuge en direction de l'autre corps profilé 60' sans toutefois atteindre cet autre corps profilé 60'.

Par ailleurs, le revêtement extérieur 61' du cordon profilé 6' de la vitre contiguë 2' présente un appendice qui s'étend latéralement d'une manière centripète en direction du revêtement extérieur 61 du cordon profilé 6 de la vitre 2 sans toutefois atteindre ce revêtement extérieur 61.

Ainsi, non seulement le corps profilé 60 du cordon profilé 6 réalise un support pour le revêtement extérieur 61 de ce cordon profilé 6 mais en outre, le corps profilé 60 réalise un appui pour le revêtement extérieur 61' du cordon profilé 6' de la vitre contiguë 2'.

Le revêtement extérieur 61' du cordon profilé 6' peut être au contact du revêtement extérieur 61 du cordon profilé 6, ou proche de lui sans contact, avec une fente f fine par exemple d'une largeur comprise entre 0,5 et 5,0 mm entre les deux revêtements extérieurs 61, 61'.

La languette latérale 63 participe au positionnement et la mise en référence de la vitre contiguë 2' vis-à-vis de la vitre 2 lors de la fabrication du vitrage 1.

La languette latérale 63 présente une largeur l₆₃ qui est par exemple d'environ 4 mm en figure 3.

En figure 5 les deux revêtements extérieurs 61, 61' comportent chacun une languette intérieure 62, 62' et ces deux languettes intérieures 62, 62' sont situées entre les deux corps profilés 60, 60', en étant de préférence venue de matière avec ledit revêtement extérieur 61, 61'. Ces deux languettes intérieures 62, 62' réalisent ensemble un tampon entre les deux corps profilés 60, 60'.

La figure 6 illustre un vitrage 100 réalisant l'assemblage de deux vitres 2, 2' qui est similaire aux vitrages précédant sauf en ce qu'il comporte un cordon profilé 6 qui intègre :
- d'une part un seul corps profilé 60 situé en vis-à-vis d'une partie, voire de la totalité du chant 21, 21' desdites vitres 2, 2', sans contact avec ces chants 21, 21',
- d'autre part, deux revêtements extérieurs 61, 61', courbes, qui comportent chacun :
- une portion située plus à l'extérieur que ledit corps profilé 60,
- et une portion (liée à la précédente et s'étendant vers l'intérieur) contre une partie seulement respectivement du chant 21, 21' desdites vitres 2, 2',
et qui présentent chacun une face extérieure qui est située dans la continuité de ladite face extérieure 20, 20' de ladite vitre 2, 2'.

Comme pour les vitrages précédant, pour le vitrage 100 lesdits revêtements extérieurs 61, 61' sont souples, d'une dureté Shore A comprise entre 45 et 90, voire entre 55 et 85.

Les deux revêtements extérieurs 61, 61' et le corps profilé 60 appartiennent au cordon profilé 6 et fond chacun partie intégrante du cordon profilé 6 ; il n'est pas possible de séparer un élément de cet ensemble en conservant l'intégrité du cordon profilé. Le cordon profilé est ainsi facile à installer, en une seule opération.

Comme le matériau du corps profilé 60 est différent de celui des revêtements extérieurs 61, 61', le cordon profilé 6 peut ainsi est fabriqué par co-extrusion de plusieurs matières, ce qui est particulièrement pratique.

Ici, les deux revêtements extérieurs 61, 61' présentent une courbure qui est à la fois en vis-à-vis d'une arête entre une face extérieure 20, 20' et à la vois en vis-à-vis d'un chant 21, 21' d'une vitre 2, 2'. Ces deux revêtements extérieurs 61, 61' sont portés par le corps profilé 60.

La présente solution est particulière indiquée lorsque le vitrage 100 présente une largeur l₁ entre lesdits chants 21, 21' qui est relativement faible, c'est-à-dire comprise entre 2,0 et 20,0 mm, voire comprise entre 3,0 et 15,0 mm, voire comprise entre 4,0 et 10,0 mm. Cette largeur l₁ est par exemple de 4,5 mm en figure 6.

De préférence le corps profilé 60 du vitrage 10 présente une tête 69 qui réalise un appui pour les deux revêtements extérieurs ; un revêtement extérieur 61, centripète est au contact du chant 21 de la vitre 2 à laquelle est fixé le corps profilé 60 qui porte ce revêtement extérieur 61 sans être au contact du chant de la vitre contigüe 2' car c'est l'autre revêtement extérieur 61', centrifuge, qui est au contact de ce chant 21' de la vitre contigüe 2'. Ce double contact (revêtement extérieur - chant) participe à diminuer la pénétration de poussière ou de fluide plus à l'intérieur et confère une apparence esthétique de continuité. Ce double contact est un contact sans adhésion. Chaque revêtement extérieur est de préférence sous compression interne au niveau du contact : revêtement extérieur - chant) ; c'est ce qui est illustré par le fait que les revêtements extérieurs 61, 61' « débordent » sur les feuilles de verres extérieures 4.

Les revêtements extérieurs 61, 61' sont situés entre les faces extérieures des vitres 2, 2' afin de réaliser une continuité de surface mais cette continuité peut toutefois être interrompue par une fente f très fine par exemple d'une largeur comprise entre 0,2 et 0,5 mm entre les deux revêtements extérieurs 61, 61'.

En figure 6, le cordon profilé 6 n'est fixé qu'à la vitre 2, grâce à la bande d'adhésion 8 située entre la face intérieure 22 et l'aile intérieure 65 ; il n'est pas fixé à la vitre adjacente 2'.

De préférence, le corps profilé 60, unique, du cordon profilé 6 du vitrage 10 présente un plan de symétrie P et de préférence encore l'ensemble formé par le corps profilé 60 et les deux revêtements extérieurs 61, 61' présente un plan de symétrie P, afin de permettre une répartition uniforme des contraintes.

Cette solution de cordon profilé 6 qui intègre un corps profilé 60 unique et un double revêtement extérieur 61, 61' peut comporter, à la place ou en plus de l'aile intérieure 65, une aile intercalaire 64, telle que celle visible dans les figures 4 et 5.

Bien que cela ne soit pas illustré, il est possible de prévoir que la vitre 2 d'un vitrage 1, 100 comporte une bande de masquage située plus à l'extérieur que l'aile intercalaire et/ou plus à l'extérieur que l'aile intérieure et cela pour masquer à la fois l'aile intercalaire et/ou l'aile intérieure ainsi que le cordon de colle 10 permettant la fixation de la vitre 2 à la carrosserie.

La vitre adjacente 2' peut aussi comporter une bande de masquage (non illustrée) pour masquer le cordon de colle 10' permettant la fixation de la vitre adjacente 2' à la carrosserie.

La présente invention est susceptible de s'appliquer à n'importe quel vitrage et en particulier à n'importe quel vitrage de véhicule. Elle peut s'appliquer à n'importe quels bords en vis-à-vis des deux vitres de ce vitrage : gauche, droit, haut ou bas.

## Revendications

1. Vitrage (1), et notamment vitrage de véhicule, comprenant deux vitres (2, 2') contiguës, avec notamment au moins une, voire les deux, vitre(s) feuilletée(s) comprenant une feuille de verre extérieure (3, 3'), une feuille de verre intérieure (5, 5') et une feuille intercalaire de matière plastique (4, 4') située entre lesdites deux feuilles de verre, chaque vitre (2, 2') présentant une face extérieure (20, 20'), un chant (21, 21') et une face intérieure (22, 22'), **caractérisé en ce qu'il** comporte :
- d'une part deux corps profilés (60, 60') situés en vis-à-vis et situés chacun au contact contre une partie du chant (21, 21') d'une desdites vitres (2, 2') et
- d'autre part un, ou deux, revêtement(s) extérieur(s) (61, 61') qui est (ou sont) situé(s chacun) plus à l'extérieur que lesdits corps profilés (60, 60') et contre une partie du chant (21, 21') desdites vitres (2, 2') et qui présente (nt chacun) une face extérieure qui est située dans la continuité de ladite face extérieure (20, 20') de ladite vitre (2, 2'),
- ledit, ou lesdits, revêtement(s) extérieur(s) (61, 61') étant souple (s), d'une dureté Shore A comprise entre 45 et 90, voire entre 55 et 85.

2. Vitrage (1) suivant la revendication 1, **caractérisé en ce qu'il** présente une largeur (l₁) entre lesdits chants (21, 21') comprise entre 2,0 et 20,0 mm, voire comprise entre 3,0 et 15,0 mm, voire comprise entre 4,0 et 10,0 mm.

3. Vitrage (1) suivant la revendication 1 ou la revendication 2, **caractérisé en ce que** un, ou les deux, corps profilé(s) (60, 60') présente(nt) une dureté Shore D comprise entre 1 et 100, voire entre 5 et 95 **et en ce que,** de préférence, la largeur (l₆₀, l_{60'}) des deux corps profilés (60, 60') est identique.

4. Vitrage (1) suivant l'une quelconque des revendications 1 à 3, **caractérisé en ce que** un, ou les deux, corps profilé(s) (60, 60') comporte(nt), vu en coupe transversale, une aile intercalaire (64, 64') située entre une face intercalaire (32, 32') de ladite feuille de verre extérieure (3, 3') et une face intercalaire (50, 50') de ladite feuille de verre intérieure (5, 5').

5. Vitrage (1) suivant la revendication 4, **caractérisé en ce que** ladite aile intercalaire (64, 64') présente une épaisseur :
- égale à l'épaisseur entre ladite feuille de verre extérieure (3, 3') et ladite feuille de verre intérieure (5, 5') et en particulier égale à l'épaisseur de ladite feuille intercalaire de matière plastique (4, 4') et notamment égale à 0,76 mm, ou
- inférieure à l'épaisseur entre ladite feuille de verre extérieure (3, 3') et ladite feuille de verre intérieure (5, 5').

6. Vitrage (1) suivant l'une quelconque des revendications 1 à 5, **caractérisé en ce que** un, ou les deux, corps profilé (s) (60, 60') comporte (nt), vu en coupe transversale, une aile intérieure (65, 65', 67') située en dessous de ladite face intérieure (22, 22') de ladite vitre (2, 2').

7. Vitrage (1) suivant la revendication 6, **caractérisé en ce que** ladite aile intérieure (65, 65', 67') comporte un bossage (66, 66') avec la pointe de la bosse orientée vers l'intérieur, ledit bossage (66, 66') présentant, de préférence, une dureté Shore A comprise entre 45 et 95, voire entre 55 et 85.

8. Vitrage (1) suivant l'une quelconque des revendications 1 à 7, **caractérisé en ce que** un, ou les deux, revêtement(s) extérieur(s) (61, 61') comporte(nt) une languette intérieure (62, 62') située (s) entre les deux corps profilés (60, 60') et étant de préférence venue de matière avec ledit revêtement extérieur (61, 61').

9. Vitrage (1) suivant l'une quelconque des revendications 1 à 8, **caractérisé en ce que** un desdits corps profilés (60) comporte une languette latérale (63).

10. Vitrage (1) suivant l'une quelconque des revendications 1 à 9, **caractérisé en ce que** lesdits deux corps profilés (60, 60') sont chacun fixés à une seule desdites vitres (2, 2').

11. Vitrage (1) suivant l'une quelconque des revendications 1 à 9, **caractérisé en ce que** lesdits deux corps profilés (60, 60') sont fixés tous les deux à une seule vitre (2) et de préférence, ledit vitrage (1) comporte un seul revêtement extérieur (61) qui présente une face extérieure qui est située dans la continuité desdites faces extérieures (20, 20') desdites vitres (2, 2').

12. Elément de vitrage pour un vitrage suivant l'une quelconque des revendications 1 à 11, comportant au moins un corps profilé (60, 60'), un ou deux revêtement (s) extérieur(s) (61, 61') et une vitre (2, 2') présentant une face extérieure (20, 20'), un chant (21, 21') et une face intérieure (22, 22'), **caractérisé en ce que** d'une part ledit au moins un corps profilé (60, 60') est situé au contact contre une partie dudit chant (21, 21') et d'autre part, le ou les deux revêtement(s) extérieur(s) (61, 61') est (ou sont) situé(s chacun) plus à l'extérieur que ledit corps profilé (60, 60') avec un revêtement extérieur (61, 61') qui est situé contre une partie dudit chant (21, 21') en présentant une face extérieure qui est située dans la continuité de la face extérieure (20, 20') de ladite vitre (2, 2'), ledit, ou lesdits, revêtement(s) extérieur(s) (61, 61') étant souple(s), d'une dureté Shore A comprise entre 45 et 90, voire entre 55 et 85.

13. Elément de vitrage suivant la revendication 12, **caractérisé en ce qu'il** comporte deux corps profilés (60, 60') dont un seul est au contact contre une partie dudit chant (21) et de préférence un seul revêtement extérieur (61) qui présente une face extérieure qui est située dans la continuité de ladite face extérieure (20) de la vitre (2, 2').

## Patentansprüche

1. Verglasung (1), und insbesondere Kraftfahrzeugverglasung, umfassend zwei angrenzende Scheiben (2, 2'), mit insbesondere mindestens einer oder sogar den zwei Verbundscheibe(n), umfassend eine äußere Glasscheibe (3, 3'), eine innere Glasscheibe (5, 5') und eine Zwischenlagenscheibe aus Kunststoffmaterial (4, 4'), die zwischen den zwei Glasscheiben angeordnet ist, wobei jede Scheibe (2, 2') eine äußere Seite (20, 20'), eine Kante (21, 21') und eine innere Seite (22, 22') vorweist, **dadurch gekennzeichnet, dass** sie aufweist:
- einerseits zwei Profilkörper (60, 60'), die gegenüber angeordnet sind und jeweils in Berührung mit einem Teil der Kante (21, 21') einer der Scheiben (2, 2') angeordnet sind, und
- andererseits eine oder zwei äußere Beschichtung(en) (61, 61'), die (jeweils) weiter außen als die Profilkörper (60, 60') und gegen einen Teil der Kante (21, 21') der Scheiben (2, 2') angeordnet ist (oder sind) und die (jeweils) eine äußere Seite vorweist/vorweisen, die in der Fortsetzung der äußeren Seite (20, 20') der Scheibe (2, 2') angeordnet ist,
- wobei die äußere(n) Beschichtung(en) (61, 61') biegsam ist/sind, mit einer Shore-A-Härte zwischen 45 und 90 oder sogar zwischen 55 und 85.

2. Verglasung (1) nach Anspruch 1, **dadurch gekennzeichnet, dass** sie eine Breite (l₁) zwischen den Kanten (21, 21') zwischen 2,0 und 20,0 mm oder sogar zwischen 3,0 und 15,0 mm oder sogar zwischen 4,0 und 10,0 mm vorweist.

3. Verglasung (1) nach Anspruch 1 oder 2, **dadurch gekennzeichnet, dass** ein oder die zwei Profilkörper (60, 60') eine Shore-D-Härte zwischen 1 und 100 oder sogar zwischen 5 und 95 aufweist/aufweisen, **und dass** vorzugsweise die Breite (l₆₀, l_{60'}) der zwei Profilkörper (60, 60') identisch ist.

4. Verglasung (1) nach einem der Ansprüche 1 bis 3,
**dadurch gekennzeichnet, dass** der oder die zwei Profilkörper (60, 60') im Querschnitt betrachtet einen Zwischenlagenflansch (64, 64') aufweist/aufweisen, der zwischen einer Zwischenlagenseite (32, 32') der äußeren Glasscheibe (3, 3') und einer Zwischenlagenseite (50, 50') der inneren Glasscheibe (5, 5') angeordnet ist.

5. Verglasung (1) nach Anspruch 4, **dadurch gekennzeichnet, dass** der Zwischenlagenflansch (64, 64') eine Dicke vorweist:
- gleich der Dicke zwischen der äußeren Glasscheibe (3, 3') und der inneren Glasscheibe (5, 5') und im Besonderen gleich der Dicke der Zwischenlagenscheibe aus Kunststoffmaterial (4, 4) und insbesondere gleich 0,76 mm, oder
- kleiner als die Dicke zwischen der äußeren Glasscheibe (3, 3') und der inneren Glasscheibe (5, 5').

6. Verglasung (1) nach einem der Ansprüche 1 bis 5,
**dadurch gekennzeichnet, dass** einer oder die zwei Profilkörper (60, 60') im Querschnitt betrachtet einen inneren Flansch (65, 65', 67') aufweist/aufweisen, der unterhalb der inneren Seite (22, 22') der Scheibe (2, 2') angeordnet ist.

7. Verglasung (1) nach Anspruch 6, **dadurch gekennzeichnet, dass** der innere Flansch (65, 65', 67') einen Buckel (66, 66') mit der Spitze der Erhöhung in Richtung des Inneren ausgerichtet aufweist, wobei der Buckel (66, 66') vorzugsweise eine Shore-A-Härte zwischen 45 und 95 oder sogar zwischen 55 und 85 vorweist.

8. Verglasung (1) nach einem der Ansprüche 1 bis 7,
**dadurch gekennzeichnet, dass** eine oder die zwei äußere(n) Beschichtung(en) (61, 61') eine innere Zunge (62, 62') aufweist/aufweisen, die zwischen den zwei Profilkörpern (60, 60') angeordnet ist/sind und vorzugsweise mit der äußeren Beschichtung (61, 61') einstückig ist.

9. Verglasung (1) nach einem der Ansprüche 1 bis 8,
**dadurch gekennzeichnet, dass** einer der Profilkörper (60) eine seitliche Zunge (63) aufweist.

10. Verglasung (1) nach einem der Ansprüche 1 bis 9,
**dadurch gekennzeichnet, dass** die zwei Profilkörper (60, 60') jeweils an einer einzigen der Scheiben (2, 2') befestigt sind.

11. Verglasung (1) nach einem der Ansprüche 1 bis 9,
**dadurch gekennzeichnet, dass** die zwei Profilkörper (60, 60') alle beide an einer einzigen Scheibe (2) befestigt sind und vorzugsweise die Verglasung (1) eine einzige äußere Beschichtung (61) aufweist, die eine äußere Seite vorweist, die in der Fortsetzung der äußeren Seiten (20, 20') der Scheiben (2, 2') angeordnet ist.

12. Verglasungselement für eine Verglasung nach einem der Ansprüche 1 bis 11, das mindestens einen Profilkörper (60, 60'), eine oder zwei äußere Beschichtung(en) (61, 61') und eine Scheibe (2, 2') aufweist, die eine äußere Seite (20, 20'), eine Kante (21, 21') und eine innere Seite (22, 22') vorweist,
**dadurch gekennzeichnet, dass** einerseits der mindestens eine Profilkörper (60, 60') in Berührung mit dem Teil der Kante (21, 21') angeordnet ist und andererseits die oder die zwei äußere(n) Beschichtung(en) (61, 61') (jeweils) weiter außen als der Profilkörper (60, 60') mit einer äußeren Beschichtung (61, 61') angeordnet ist (oder sind), die gegen einen Teil der Kante (21, 21') angeordnet ist, indem sie eine äußere Seite vorweist, die in der Fortsetzung der äußeren Seite (20, 20') der Scheibe (2, 2') angeordnet ist, wobei die äußere(n) Beschichtung(en) (61, 61') biegsam ist/sind, mit einer Shore-A-Härte zwischen 45 und 90 oder sogar 55 oder 85.

13. Verglasungselement nach Anspruch 12, **dadurch gekennzeichnet, dass** es zwei Profilkörper (60, 60'), von denen ein einziger in Berührung mit einem Teil der Kante (21) ist, und vorzugsweise eine einzige äußere Beschichtung (61) aufweist, die eine äußere Seite vorweist, die in der Fortsetzung der Außenseite (20) der Verglasung (2, 2') angeordnet ist.

## Claims

1. Glazing (1), and in particular vehicle glazing, comprising two contiguous windows (2, 2'), in particular with at least one, or even two, laminated window(s) comprising an exterior layer of glass (3, 3'), an interior layer of glass (5, 5') and a plastic material interlayer (4, 4') situated between said two layers of glass, each window (2, 2') having an exterior face (20, 20'), an edge surface (21, 21') and an interior face (22, 22'), **characterized in that** it includes:
- on the one hand two profiled bodies (60, 60') situated face to face and each situated in contact against a part of the edge surface (21, 21') of one of said windows (2, 2'), and
- on the other hand one, or two, exterior covering(s) (61, 61') that is (or are each) situated farther toward the exterior than said profiled bodies (60, 60') and against a part of the edge surface (21, 21') of said windows (2, 2') and that has (or each have) an exterior face that is situated in continuity with said exterior face (20, 20') of said window (2, 2'),
- said exterior covering(s) (61, 61') being flexible, with a Shore A hardness between 45 and 90 inclusive, or even between 55 and 85 inclusive.

2. The glazing (1) as claimed in claim 1, **characterized in that** it has a width (l₁) between said edge surfaces (21, 21') between 2.0 and 20.0 mm inclusive, or even between 3.0 and 15.0 mm inclusive, or even between 4.0 and 10.0 mm inclusive.

3. The glazing (1) as claimed in claim 1 or claim 2, **characterized in that** one, or the two, profiled body (or bodies) (60, 60') has (or have) a Shore D hardness between 1 and 100 inclusive, or even between 5 and 95 inclusive and **in that** the widths (l₆₀, l_{60'}) of the two profiled bodies (60, 60') are preferably identical.

4. The glazing (1) as claimed in any one of claims 1 to 3, **characterized in that** one, or the two, profiled body (or bodies) (60, 60') include(s), seen in cross section, an interlayer wing (64, 64') situated between an interlayer face (32, 32') of said exterior layer of glass (3, 3') and an interlayer face (50, 50') of said interior layer of glass (5, 5').

5. The glazing (1) as claimed in claim 4, **characterized in that** said interlayer wing (64, 64') has a thickness:
- equal to the thickness between said exterior layer of glass (3, 3') and said interior layer of glass (5, 5') and in particular equal to the thickness of said plastic material interlayer (4, 4') and in particular equal to 0.76 mm, or
- less than the thickness between said exterior layer of glass (3, 3') and said interior layer of glass (5, 5').

6. The glazing (1) as claimed in any one of claims 1 to 5, **characterized in that** one, or the two, profiled body or bodies (60, 60') include(s), seen in cross section, an interior wing (65, 65', 67') situated under said interior face (22, 22') of said window (2, 2').

7. The glazing (1) as claimed in claim 6, **characterized in that** said interior wing (65, 65', 67') includes a boss (66, 66') with the point of the boss oriented toward the interior, said boss (66, 66') preferably having a Shore A hardness between 45 and 95 inclusive, or even between 55 and 85 inclusive.

8. The glazing (1) as claimed in any one of claims 1 to 7, **characterized in that** one, or the two, exterior covering(s) (61, 61') include(s) an interior tongue (62, 62') situated between the two profiled bodies (60, 60') and preferably in one piece with said exterior covering (61, 61').

9. The glazing (1) as claimed in any one of claims 1 to 8, **characterized in that** one of said profiled bodies (60) includes a lateral tongue (63).

10. The glazing (1) as claimed in any one of claims 1 to 9, **characterized in that** each of said two profiled bodies (60' 60') is fixed to only one of said windows (2, 2').

11. The glazing (1) as claimed in any one of claims 1 to 9, **characterized in that** said two profiled bodies (60, 60') are both fixed to a single window (2) and said glazing (1) preferably includes a single exterior covering (61) that has an exterior face that is situated in continuity with said exterior faces (20, 20') of said windows (2, 2').

12. Glazing element for a glazing as claimed in any one of claims 1 to 11, comprising at least one profiled body (60, 60'), one or two exterior covering (s) (61, 61') and a window (2, 2') having an exterior face (20, 20'), an edge surface (21, 21') and an interior face (22, 22') **characterized in that** on the one hand the at least one profiled body (60, 60') is situated in contact against a part of said edge surface (21, 21') and on the other hand, the one or the two exterior covering (s) (61, 61') that is (or are) each situated farther toward the exterior than said profiled body (60, 60') and an exterior covering (61, 61') of which is situated against a part of said edge surface (21, 21') and has an exterior face that is situated in continuity with said exterior face (20, 20') of the window (2, 2'), said exterior covering (s) (61, 61') being flexible, with a Shore A hardness between 45 and 90 inclusive, or even between 55 and 85 inclusive.

13. Glazing element as claimed in claim 12, **characterized in that** it includes two profiled bodies (60, 60') only one of which is in contact against a part of said edge surface (21) and preferably only one exterior covering (61) that has an exterior face that is situated in continuity with said exterior face (20) of the window (2, 2').
